# EUROPEAN PATENT APPLICATION

(11) **EP 4 549 098 A1**
(43) Date of publication of application: **07.05.2025**
(21) Application number: 23902520.8
(22) Date of filing: 01.12.2023
(51) Int. Cl.: B25J 9/00

(54) **LIFTING MECHANISM AND ROBOT**

(30) Priority: 13.12.2022 CN 202211600421
(71) Applicant: BEIJING YOUZHUJU NETWORK TECHNOLOGY CO. LTD., Beijing 101299 (CN)
(72) Inventor: LIU, Yunfei, Beijing 100028 (CN); SUN, Huaqing, Beijing 100028 (CN)
(74) Representative: Williams, Michael David
(86) International application number: PCT/CN2023/135868
(87) International publication number: WO 2024/125323

(57) **Abstract**

The present disclosure relates to a lifting mechanism and a robot. The lifting mechanism comprises a fixed structure, a first lifting structure, a second lifting structure, a driving structure and a synchronization assembly. The first lifting structure is connected to the fixed structure movably in an up-down direction so as to extend upwards from the fixed structure, and the second lifting structure can move up and down relative to the first lifting structure. The driving structure is used for driving the first lifting structure to move up and down relative to the fixed structure, and the synchronization assembly comprises a first synchronization wheel and a synchronization member, the first synchronization wheel being rotatably arranged at the upper end of the first lifting structure, and the synchronization member being wound on the first synchronization wheel and being provided with a first connecting part and a second connecting part which are located on the two sides of the first synchronization wheel respectively. The first connecting part is fixed to the fixed structure, and the second connecting part is fixed to the second lifting structure, so that the synchronization member can drive the second lifting structure to move up and down relative to the first lifting structure when the first lifting structure moves up and down relative to the fixed structure.

## Description

The present disclosure is based on and claims priority to Chinese Application for Invention No. 202211600421.9, filed on December 13, 2022, the disclosure of which is incorporated by reference herein in its entirety.

### TECHNICAL FIELD

The present disclosure relates to the field of lifting mechanisms, and in particular, to a lifting mechanism and a robot.

### BACKGROUND

There is an image acquisition device arranged inside a robot for checking an external device , and the image acquisition device is mounted on a lifting mechanism so as to be able to move up and down.

### SUMMARY

An object of the present disclosure is to provide a lifting mechanism and a robot.

In a first aspect of some embodiments of the present disclosure, a lifting mechanism is provided, including:
a fixed structure;
a first lifting structure, connected to the fixed structure movably in an up-and-down direction so as to be able to extend upward out of the fixed structure;
a second lifting structure, configured to be capable of moving up and down relative to the first lifting structure;
a driving structure, configured to drive the first lifting structure to move up and down relative to the fixed structure; and
a synchronization assembly, including a first synchronization wheel and a synchronization member, wherein the first synchronization wheel is rotatably disposed at an upper end of the first lifting structure, the synchronization member is wound around the first synchronization wheel, the synchronization member has a first connecting portion and a second connecting portion which are located on two sides of the first synchronization wheel respectively, the first connecting portion is fixed to the fixed structure, and the second connecting portion is fixed to the second lifting structure, so that the synchronization member is able to cause the second lifting structure to move up and down relative to the first lifting structure when the first lifting structure moves up and down relative to the fixed structure.

In some embodiments, the synchronization assembly further includes a second synchronization wheel, the second synchronization wheel is rotatably disposed at a lower end of the first lifting structure, the synchronization member is formed in a ring shape and wound around the second synchronization wheel, the driving structure is fixed to the first lifting structure, and the driving structure is connected to the first synchronization wheel or the second synchronization wheel, and configured to drive the first synchronization wheel or the second synchronization wheel to rotate.

In some embodiments, a distance between the first connecting portion and the first synchronization wheel is the same as a distance between the second connecting portion and the second synchronization wheel.

In some embodiments, the first lifting structure has a maximum extended position and a maximum retracted position, at the maximum extended position, the first connecting portion is close to the second synchronization wheel and the second connecting portion is close to the first synchronization wheel, and at the maximum retracted position, the first connecting portion is close to the first synchronization wheel and the second connecting portion is close to the second synchronization wheel.

In some embodiments, the driving structure includes a motor, and an output shaft of the motor is perpendicular to the up-and-down direction, and the output shaft of the motor is connected to the first synchronization wheel or the second synchronization wheel; or,
the driving structure includes a motor, a first bevel gear, a second bevel gear and a transmission shaft, an output shaft of the motor extends in the up-and-down direction, a rotation axis of the first bevel gear extends in the up-and-down direction, a rotation axis of the second bevel gear is perpendicular to the rotation axis of the first bevel gear, the output shaft of the motor is connected to the first bevel gear, the first bevel gear is engaged with the second bevel gear, and the second bevel gear is connected to the first synchronization wheel or the second synchronization wheel via the transmission shaft.

In some embodiments, the synchronization member is a synchronization belt, the first synchronization wheel is a first synchronization pulley, and the second synchronization wheel is a second synchronization pulley; or,
the synchronization member is a synchronization chain, the first synchronization wheel is a first synchronization sprocket, and the second synchronization wheel is a second synchronization sprocket.

In some embodiments, the fixed structure has a first chute portion with an opening facing the first lifting structure, a side of the first lifting structure close to the fixed structure is formed with a first slide rail portion extending in the up-and-down direction, the first slide rail portion is in sliding fit with the first chute portion, and the first connecting portion is located in the first chute portion and fixed to the first chute portion;
the second lifting structure has a second chute portion with an opening facing the first lifting structure, a side of the first lifting structure close to the second lifting structure is formed with a second slide rail portion extending in the up-and-down direction, the second slide rail portion is in sliding fit with the second chute portion, and the second connecting portion is located in the second chute portion and fixed to the second chute portion.

In some embodiments, the first connecting portion is adhered to the first chute portion, and the second connecting portion is adhered to the second chute portion.

In some embodiments, the lifting mechanism further includes a first pressing plate, at least a part of the first pressing plate is located in the first chute portion and configured to press the first connecting portion against an inner wall of the first chute portion;
the lifting mechanism further includes a second pressing plate, at least a part of the second pressing plate is located in the second chute portion and configured to press the second connecting portion against an inner wall of the second chute portion.

In some embodiments, the first lifting structure is provided with a limiting structure, the limiting structure protrudes outward from the first slide rail portion and the second slide rail portion, the limiting structure is arranged close to a lower end of the first lifting structure, and the limiting structure can block at a lower end of the first chute portion in a process of the first lifting structure moving upward, and block at a lower end of the second chute portion in a process of the first lifting structure moving downward.

In a second aspect of some embodiments of the present disclosure, a robot is provided, including an image acquisition device and the lifting mechanism described above, wherein the image acquisition device is mounted on the second lifting structure of the lifting mechanism.

Other features and advantages of the present disclosure will be described in detail in the following Detailed Description section.

### BRIEF DESCRIPTION OF THE DRAWINGS

The drawings are used to provide a further understanding of the present disclosure, and constitute a part of the specification, and are used to explain the present disclosure together with the following specific embodiments, but do not constitute a limitation to the present disclosure. In the drawings:
FIG. 1 is a perspective view of a lifting mechanism provided by an exemplary embodiment of the present disclosure, where a first lifting structure is in a maximum retracted position;
FIG. 2 is a perspective view of a lifting mechanism provided by an exemplary embodiment of the present disclosure, where a first lifting structure is in a maximum extended position;
FIG. 3 is a side view of a lifting mechanism provided by an exemplary embodiment of the present disclosure, where a first lifting structure is in a maximum retracted position;
FIG. 4 is a front view of a lifting mechanism provided by an exemplary embodiment of the present disclosure, where a first lifting structure is in a maximum retracted position, and a local structure of the lifting mechanism is sectioned to show a motor;
FIG. 5 is a sectional view after sectioning along "A-A" in FIG. 4; and
FIG. 6 is a sectional view after sectioning along "B-B" in FIG. 4.

### Reference Signs

100-lifting mechanism; 1-fixed structure; 11-first chute portion; 2-first lifting structure; 21-first slide rail portion; 22-second slide rail portion; 23-limiting structure; 3-second lifting structure; 31-second chute portion; 4-driving structure; 41-motor; 42-transmission shaft; 43-motor mounting bracket; 5-synchronization assembly; 50-synchronization member; 51-first connecting portion; 52-second connecting portion; 53-first synchronization wheel; 54-second synchronization wheel; 61-first pressing plate; 62-second pressing plate.

### DETAILED DESCRIPTION OF EMBODIMENTS

Specific implementations of the present disclosure will be described in detail below with reference to the drawings. It should be understood that the specific implementations described here are only for illustrating and explaining the present disclosure, and are not intended to limit the present disclosure.

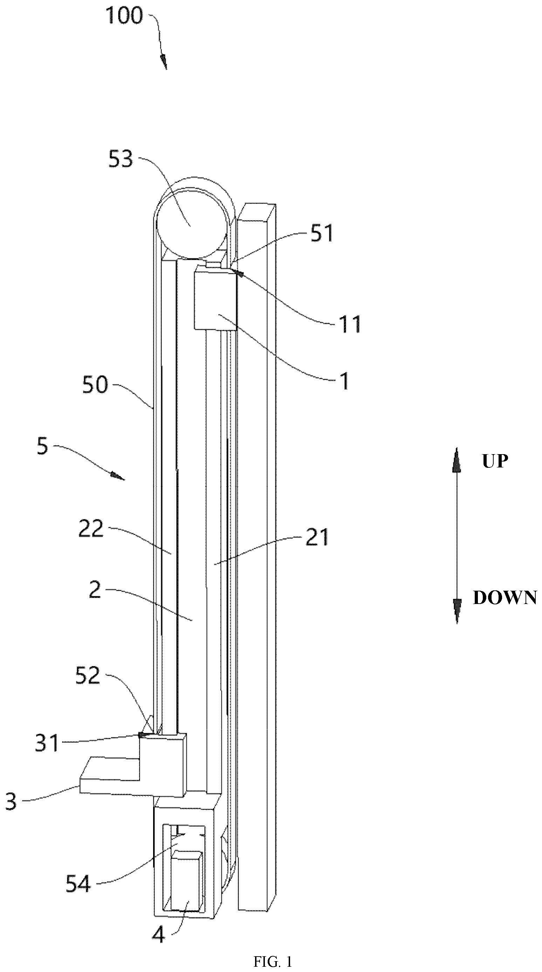

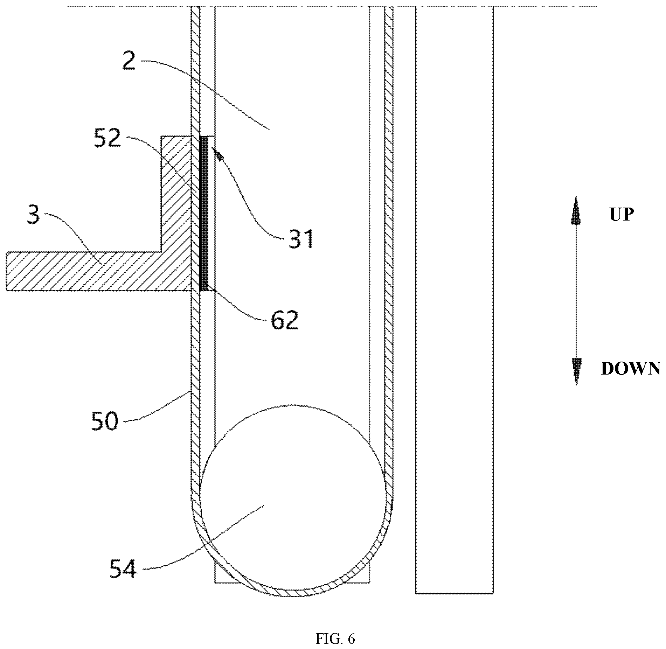

In the present disclosure, unless otherwise stated, the orientation words used, such as "up and down", refer to up and down of the lifting mechanism in use state, referring to up and down as shown in FIGS. 1-6, and "inside and outside" refer to inside and outside of contours of related components. In addition, it should be noted that the terms used, such as "first" and "second", are used to distinguish one element from another, without involving order and importance. In addition, in the description with reference to the drawings, the same symbol in different drawings represents the same element.

An image acquisition device is arranged inside a robot for checking an external device, and the image acquisition device is mounted on a lifting mechanism so as to be able to move up and down. The lifting mechanism inside the robot in the related art usually includes a slide rail structure, and the image acquisition device is movable in an up-and-down direction along the slide rail structure. Since the robot needs to move to different height positions to work, the size of the slide rail structure in the up-and-down direction is large, which makes the center of gravity of the robot high, which will lead to poor movement stability of the robot and the robot is prone to rollover.

An objective of the present disclosure is to provide a lifting mechanism and a robot to solve the technical problems existing in the related art.

As shown in FIG. 1 to FIG. 6, in a first aspect of the present disclosure, a lifting mechanism 100 is provided, including a fixed structure 1, a first lifting structure 2, a second lifting structure 3, a driving structure 4 and a synchronizing assembly 5, the first lifting structure 2 is connected to the fixed structure 1 movably in an up-and-down direction so as to be able to extend upward out of the fixed structure 1, the second lifting structure 3 is configured to be capable of moving up and down relative to the first lifting structure 2, the driving structure 4 is configured to drive the first lifting structure 2 to move up and down relative to the fixed structure 1, the synchronization assembly 5 includes a first synchronization wheel 53 and a synchronization member 50, the first synchronization wheel 53 is rotatably disposed at an upper end of the first lifting structure 2, the synchronization member 50 is wound around the first synchronization wheel 53, the synchronization member 50 has a first connecting portion 51 and a second connecting portion 52 which are located on two sides of the first synchronization wheel 53 respectively, the first connecting portion 51 is fixed to the fixed structure 1, and the second connecting portion 52 is fixed to the second lifting structure 3, so that the synchronization member 50 is able to cause the second lifting structure 3 to move up and down relative to the first lifting structure 2 when the first lifting structure 2 moves up and down relative to the fixed structure 1.

In the above lifting mechanism 100, since the synchronization member 50 is wound around the first synchronization wheel 53, the synchronization member 50 has the first connecting portion 51 and the second connecting portion 52, the first connecting portion 51 and the second connecting portion 52 are respectively located on two sides of the first synchronization wheel 53, the first connecting portion 51 is fixed on the fixed structure 1, and the second connecting portion 52 is fixed on the second lifting structure 3, the first lifting structure 2 and the second lifting structure 3 can be interlocked with each other when moving up and down, and the first lifting structure 2 and the second lifting structure 3 have the same moving direction, that is, when the first lifting structure 2 moves upward relative to the fixed structure 1, the second lifting structure 3 can move upward relative to the first lifting structure 2, and when the first lifting structure 2 moves downward relative to the fixed structure 1, the second lifting structure 3 can move downward relative to the first lifting structure 2.

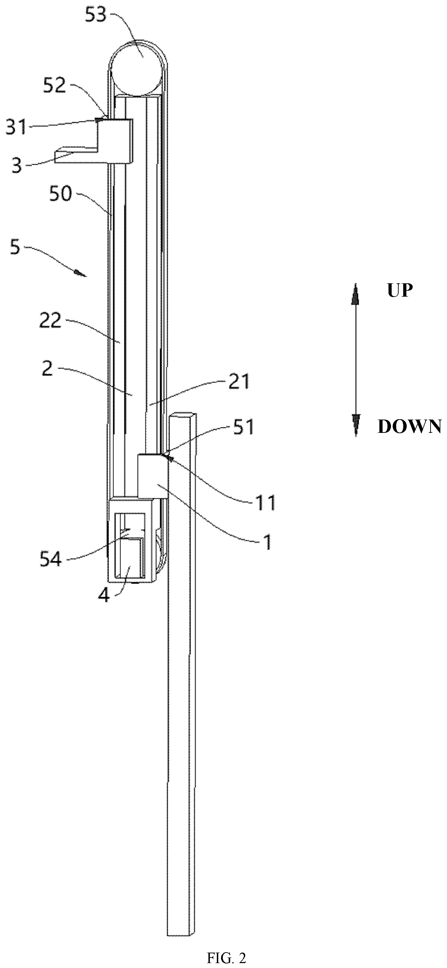

In some embodiments, as shown in FIG. 1 and FIG. 2, when the first lifting structure 2 moves upward relative to the fixed structure 1 under the driving action of the driving structure 4, since the first connecting portion 51 is fixed on the fixed structure 1, the position between the first connecting portion 51 and the fixed structure 1 is unchanged, the first synchronization wheel 53 at the upper end of the first lifting structure 2 moves upward with the first lifting structure 2, so that the synchronization member 50 wound around the first synchronization wheel 53 slides relative to the first synchronization wheel 53, the second connecting portion 52 of the synchronization member 50 is fixed on the second lifting structure 3, and the synchronization member 50 can provide the second lifting structure 3 with a driving force to pull the second lifting structure 3 to move upward relative to the first lifting structure 2, so that the second lifting structure 3 moves upward relative to the first lifting structure 2. At this time, the distance that the second lifting structure 3 moves upward relative to the fixed structure 1 is equal to the sum of the distance that the first lifting structure 2 moves upward relative to the fixed structure 1 and the distance that the second lifting structure 3 moves upward relative to the first lifting structure 2.

When the first lifting structure 2 moves downward relative to the fixed structure 1 under the driving action of the driving structure 4, similarly, since the first synchronization wheel 53 at the upper end of the first lifting structure 2 moves downward with the first lifting structure 2, the synchronization member 50 wound around the first synchronization wheel 53 slides relative to the first synchronization wheel 53, and the second lifting structure 3 can move downward relative to the first lifting structure 2 under its own gravity or the driving action of the synchronization member 50.

It can be seen that the above lifting mechanism 100 can realize synchronous interlocking between the first lifting structure 2 and the second lifting structure 3 through the synchronizing assembly 5, and the first lifting structure 2 and the second lifting structure 3 have the same moving direction. The above lifting mechanism 100 can realize that one driving structure 4 drives the first lifting structure 2 to move up and down relative to the fixed structure 1, and concurrently causes the second lifting structure 3 to move up and down relative to the first lifting structure 2, that is, by means of one driving structure 4, the first lifting structure 2 and the second lifting structure 3 can move upward or downward concurrently, thereby simplifying the structure of the lifting mechanism 100 and saving costs. In addition, the interlocking of the first lifting structure 2 and the second lifting structure 3 can realize rapid movement of the second lifting structure 3 in the up-and-down direction, and the distance that the second lifting structure 3 moves upward relative to the fixed structure 1 is equal to the sum of the distance that the first lifting structure 2 moves upward relative to the fixed structure 1 and the distance that the second lifting structure 3 moves upward relative to the first lifting structure 2. Therefore, compared with a solution of directly driving the lifting structures to move, the second lifting structure 3 of the present disclosure can move more quickly in the up-and-down direction, and the lifting function can be realized quickly, thereby improving the lifting efficiency.

In addition, the above lifting mechanism 100 may have a stowed state and an extended state when in use, in the stowed state, the first lifting structure 2 moves downward relative to the fixed structure 1, and the second lifting structure 3 moves downward relative to the first lifting structure 2, which can reduce the overall height of the lifting mechanism 100, thereby lowering the center of gravity of the lifting mechanism 100 to improve the stability of the lifting mechanism 100 and facilitate movement. For example, when the above lifting mechanism 100 is applied to a movable device such as a robot or a transport robot, in the moving process, the lifting mechanism 100 may be in the stowed state, so as to lower the center of gravity of the overall structure, improve the movement stability and safety of the overall structure, and reduce the possibility of rollover due to an excessively high center of gravity during the movement of the structure.

The lifting mechanism 100 also has an extended state, in the extended state, the first lifting structure 2 moves upward relative to the fixed structure 1, and the second lifting structure 3 moves upward relative to the first lifting structure 2, so that the second lifting structure 3 can move to the upper end of the lifting mechanism 100 to meet the requirement of height. For example, the second lifting structure 3 may be used as a transport platform or a transfer platform, and the second lifting structure 3 can move an object upward to a specified height by moving in the up-and-down direction. Alternatively, the second lifting structure 3 may also be used as a mounting platform for a sensor or an image acquisition device, and the second lifting structure 3 can change a detection or acquisition range of the sensor or the image acquisition device by moving in the up-and-down direction, so as to meet the height requirement of the structure in different application scenarios. The present disclosure does not specifically limit the application scenarios of the above lifting mechanism 100.

Through the above technical solution, the lifting mechanism 100 may have a stowed state and an extended state when in use, and the lifting mechanism 100 may lower its overall center of gravity in the stowed state, so as to improve the structural stability of the lifting mechanism 100 and facilitate the movement of the lifting mechanism 100. In the extended state, the lifting mechanism 100 can make the second lifting structure 3 have a larger height, so as to meet the height requirements in different application scenarios. In addition, the above lifting mechanism 100 can realize the interlocking between the first lifting structure 2 and the second lifting structure 3 through the synchronization assembly 5, so that the first lifting structure 2 and the second lifting structure 3 can move upward concurrently by means of one driving structure 4, simplify the structure and save costs, and the interlocking of the first lifting structure 2 and the second lifting structure 3 can realize rapid movement of the second lifting structure 3 in the up-and-down direction, improve the lifting efficiency of the second lifting structure 3, which is beneficial to apply to different application scenarios.

As an exemplary application scenario, the above lifting mechanism 100 may be applied to a robot, and the second lifting structure 3 may be fixed with the image acquisition device of the robot. In the moving process of the robot, the first lifting structure 2 and the second lifting structure 3 of the lifting mechanism 100 may both move downward, so that the lifting mechanism 100 is in the stowed state, thereby lowering the overall center of gravity of the robot and improving the stability and safety of the robot in the moving process. When the robot acquires images of an external structure (such as a chassis, a locker or a container, etc.), the first lifting structure 2 and the second lifting structure 3 of the lifting mechanism 100 may move upward respectively, so that the image acquisition device on the second lifting structure 3 can have a suitable image acquisition height to realize an image acquisition function. Since the first lifting structure 2 and the second lifting structure 3 are interlocked through the synchronizing assembly 5, it can be realized that the first lifting structure 2 and the second lifting structure 3 move upward concurrently through one driving, which can simplify the structure inside the robot and save costs, reduce the weight of the robot, and improve the battery life of the robot. In addition, the interlocking of the first lifting structure 2 and the second lifting structure 3 can realize the rapid movement of the second lifting structure 3 in the up-and-down direction, which can improve the moving efficiency of the image acquisition device in the up-and-down direction, realize rapid stowing and extension, and can realize reaching a specified height rapidly to perform rapid acquisition, thereby improving the image acquisition efficiency.

The above synchronization member 50 may be a structure such as a synchronization belt, a synchronization chain or a pull rope. As an exemplary implementation, the synchronization member 50 may be a pull rope, one end of the pull rope may be fixed on the fixed structure 1, and the other end may be fixed on the second lifting structure 3, the pull rope is wound around the first synchronization wheel 53, and the driving structure 4 may be a linear driving structure such as a linear motor, a screw nut structure, a rack and pinion structure, or a telescopic rod, the driving structure 4 may directly or indirectly drive the first lifting structure 2 to move in the up-and-down direction, and in the process of the first lifting structure 2 moving upward relative to the fixed structure 1, the pull rope is in a tensioned state, one end of the pull rope is fixed on the fixed structure 1, and the other end can pull the second lifting structure 3 to move upward relative to the first lifting structure 2. in the process of the first lifting structure 2 moving downward relative to the fixed structure 1, the pull rope loses the pulling force on the second lifting structure 3, and the second lifting structure 3 moves downward relative to the first lifting structure 2 under the action of its own gravity.

As another exemplary implementation, the synchronization member 50 may be a structure such as a synchronization belt or a synchronization chain.

In some embodiments, the synchronization assembly 5 may further include a second synchronization wheel 54, the second synchronization wheel 54 is rotatably disposed at the lower end of the first lifting structure 2, the synchronization member 50 is formed in a ring shape and wound around the second synchronization wheel 54, the driving structure 4 is fixed on the first lifting structure 2, and the driving structure 4 is connected to the first synchronization wheel 53 or the second synchronization wheel 54 and configured to drive the first synchronization wheel 53 or the second synchronization wheel 54 to rotate.

In the above embodiments, the synchronization member 50 is formed in a ring shape and wound around the first synchronization wheel 53 and the second synchronization wheel 54 concurrently. As shown in FIG. 1 and FIG. 2, when the first lifting structure 2 moves upward relative to the fixed structure 1 under the driving action of the driving structure 4, the synchronization member 50 located between the upper side of the second lifting structure 3 and the first connecting portion 51 is in a tensioned state, and the synchronization member 50 can provide the second lifting structure 3 with a pulling force to pull the second lifting structure 3 to move upward, so that the second lifting structure 3 moves upward relative to the first lifting structure 2. When the first lifting structure 2 moves downward relative to the fixed structure 1 under the driving action of the driving structure 4, the synchronization member 50 located between the lower side of the second lifting structure 3 and the first connecting portion 51 is in a tensioned state, and the synchronization member 50 can provide the second lifting structure 3 with a pulling force to pull the second lifting structure 3 to move downward, so that the second lifting structure 3 moves downward relative to the first lifting structure 2. It can be seen that whether the first lifting structure 2 moves upwards or downwards, the synchronization member 50 can exert a pulling force on the second lifting structure 3 to ensure that the second lifting structure 3 can move relative to the first lifting structure 2, so that the second lifting structure 3 has good movement stability and safety. In addition, the synchronization member 50 is formed in a ring shape and wound around the first synchronization wheel 53 and the second synchronization wheel 54 concurrently, so that the transmission relationship among the synchronization member 50, the first synchronization wheel 53 and the second synchronization wheel 54 can have better stability, and the problem of disengagement is not prone to occur.

As shown in FIG. 1 and FIG. 2, in some embodiments, the distance between the first connecting portion 51 and the first synchronization wheel 53 may be the same as the distance between the second connecting portion 52 and the second synchronization wheel 54, that is, the lengths of two parts of the ring-shaped synchronization belt located between the first connecting portion 51 and the second connecting portion 52 are the same. The distances that the synchronization member 50 carries the second lifting structure 3 to move upward or downward can be equal, which is convenient for planning the interlocking relationship between the first lifting structure 2 and the second lifting structure 3.

In some embodiments, the first lifting structure 2 may have a maximum extended position and a maximum retracted position, at the maximum extended position, the first connecting portion 51 is close to the second synchronization wheel 54, and the second connecting portion 52 is close to the first synchronization wheel 53, and at the maximum retracted position, the first connecting portion 51 is close to the first synchronization wheel 53, and the second connecting portion 52 is close to the second synchronization wheel 54. Here, the maximum retracted position of the first lifting structure 2 refers to a position where the first lifting structure 2 is located when the lower end of the first lifting structure 2 moves downward to the lowest point of a preset moving range of the first lifting structure 2, and the maximum extended position of the first lifting structure 2 refers to a position where the first lifting structure 2 is located when the upper end of the first lifting structure 2 moves upward to the highest point of the preset moving range of the first lifting structure 2.

In the case that the lifting mechanism 100 is in the stowed state, as shown in FIG. 1, the first lifting structure 2 moves to the maximum retracted position relative to the fixed structure 1, the first connecting portion 51 is close to the second synchronization wheel 54, and the second connecting portion 52 is close to the first synchronization wheel 53, at this time, the second lifting structure 3 is also in the maximum retracted position relative to the first lifting structure 2, and both the first lifting structure 2 and the second lifting structure 3 are in the maximum retracted position, so that the center of gravity of the lifting mechanism 100 can be lowered to the greatest extent, and the stability can be improved. Similarly, in the case that the lifting mechanism 100 is in the extended state, as shown in FIG. 2, the first lifting structure 2 moves to the maximum extended position relative to the fixed structure 1, the first connecting portion 51 is close to the first synchronization wheel 53, and the second connecting portion 52 is close to the second synchronization wheel 54, the second lifting structure 3 is also in the maximum extended position relative to the first lifting structure 2, and both the first lifting structure 2 and the second lifting structure 3 are in the maximum extended position, so that the second lifting structure 3 can have the largest height to realize the lifting function. It can be seen that the lifting mechanism 100 in the above embodiments can make full use of the sizes of the first lifting structure 2 and the second lifting structure 3 to the greatest extent, so that the second lifting structure 3 can have a large stroke in the up-and-down direction.

In the above embodiments, as an exemplary implementation, the synchronization member 50 may be a synchronization belt, the first synchronization wheel 53 is a first synchronization pulley, and the second synchronization wheel 54 is a second synchronization pulley. The synchronization belt, the first synchronization pulley and the second synchronization pulley may be driven by friction therebetween, and the synchronization belt is light in weight and stable in structure, and no abnormal noise will occur during operation, so that the lifting mechanism 100 has advantages of stable structure and function, small overall weight and low operation noise.

As another exemplary implementation, the synchronization member 50 may also be a synchronization chain, the first synchronization wheel 53 is a first synchronization sprocket, and the second synchronization wheel 54 is a second synchronization sprocket. The synchronization chain, the first synchronization sprocket and the second synchronization sprocket may be driven by engagement therebetween, which has high transmission stability and strong load-bearing capacity, and can cause the first lifting structure 2 and the second lifting structure 3 with relatively large masses to move.

In an embodiment where the synchronization member 50 is annular, since the synchronization member 50 is wound around the first synchronization wheel 53 and the second synchronization wheel 54 concurrently, the synchronization member 50 can always be in a tensioned state, that is, the synchronization member 50 can rotate under the driving of the first synchronization wheel 53 or the second synchronization wheel 54. In the embodiment, in some embodiments, the driving structure 4 may be a rotational driving structure 4, and the rotational driving structure 4 can drive the first synchronization wheel 53 or the second synchronization wheel 54 to rotate. When the driving structure 4 drives the first synchronization wheel 53 or the second synchronization wheel 54 to rotate, the first synchronization wheel 53 or the second synchronization wheel 54 that rotates can provide the synchronization member 50 with a driving force for rotation, since the first connecting portion 51 of the synchronization member 50 is fixed on the fixed structure 1, and the second connecting portion 52 is fixed on the second lifting structure 3, the tension on the synchronization member 50 can be transmitted to the first lifting structure 2, thereby driving the first lifting structure 2 to move in the up-and-down direction.

As an exemplary implementation, the driving structure 4 can drive the second synchronization wheel 54 to rotate, taking driving the first lifting structure 2 to move upward as an example, as shown in FIG. 1 and FIG. 2, in some embodiments, the synchronization member 50 is formed in a ring shape and wound around the second synchronization wheel 54 and the first synchronization wheel 53, since the first connecting portion 51 of the synchronization member 50 is fixed on the fixed structure 1, the second connecting portion 52 is fixed on the second lifting structure 3, and the second synchronization wheel 54 is located at the lower end of the first lifting structure 2 and connected to the first lifting structure 2, the second synchronization wheel 54 and the first lifting structure 2 can only move in the up-and-down direction. When the driving structure 4 drives the second synchronization wheel 54 to rotate, the rotational torque of the second synchronization wheel 54 is transmitted to the synchronization member 50 in contact with it, and the synchronization member 50 generates a tension force after being forced, since the first lifting structure 2 and the synchronizing assembly only have torques for moving up and down, the tension force from the synchronization member 50 acts on the second synchronization wheel 54 and the first lifting structure 2, and the second synchronization wheel 54 and the first lifting structure 2 can only move upward, thereby driving the first lifting structure to move upward. In the process of the first lifting structure 2 moving upward, the first connecting portion 51 of the synchronization member 50 remains unchanged relative to the fixed structure 1, and the synchronization member 50 rotates relative to the first synchronization wheel 53 and the second synchronization wheel 54, thereby causing the second lifting structure 3 to move upward relative to the first lifting structure 2. It can be seen that the driving structure 4 in the above embodiment realizes the technical effect of driving the first lifting structure 2 to move upward while causing the second lifting structure 3 to move upward.

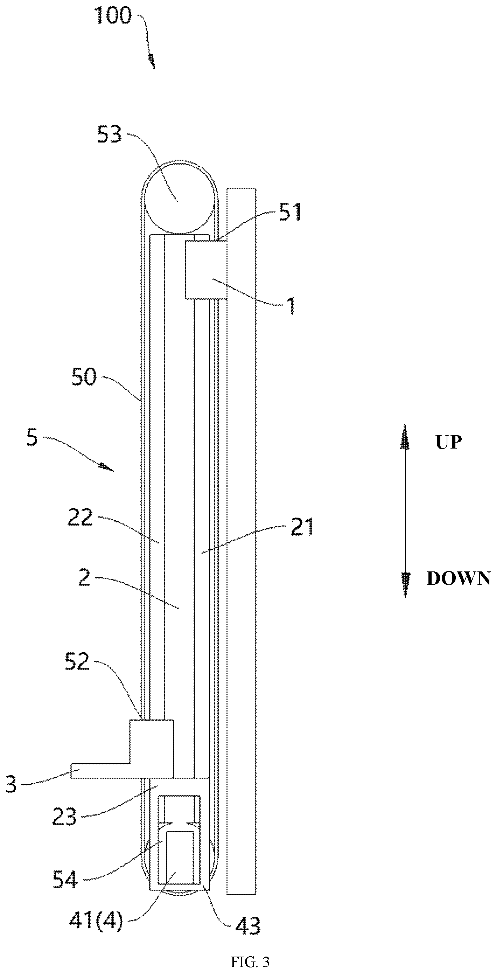

The above driving structure 4 may include a motor 41, in an embodiment where the driving structure 4 is a motor 41, the driving structure 4 is configured to drive the first synchronization wheel 53 or the second synchronization wheel 54 to rotate, when the first synchronization wheel 53 or the second synchronization wheel 54 moves with the first lifting structure 2 in the up-and-down direction, the driving structure 4 also moves with the first lifting structure 2 in the up-and-down direction. In order to facilitate arrangement of the driving structure 4, as shown in FIG. 3, in some embodiments, the lifting mechanism 100 may include a motor mounting bracket 43, which may be fixedly connected to the first lifting structure 2, and the motor 41 may be mounted on the motor mounting bracket 43, so as to be able to move with the first lifting structure 2 in the up-and-down direction, thereby ensuring that the motor 41 can always drive the first synchronization wheel 53 or the second synchronization wheel 54.

As an exemplary implementation, in some embodiments, the driving structure 4 may include a motor 41, an output shaft of the motor 41 may be perpendicular to the up-and-down direction, and the output shaft of the motor 41 is connected to the first synchronization wheel 53 or the second synchronization wheel 54. In the embodiment, the output shaft of the motor 41 is directly connected to the first synchronization wheel 53 or the second synchronization wheel 54, and the driving efficiency is high.

As another exemplary implementation, the driving structure 4 may include a motor 41, a first bevel gear, a second bevel gear and a transmission shaft 42, an output shaft of the motor 41 extends in the up-and-down direction, a rotation axis of the first bevel gear extends in the up-and-down direction, a rotation axis of the second bevel gear is perpendicular to the rotation axis of the first bevel gear, the output shaft of the motor 41 is connected to the first bevel gear, the first bevel gear is engaged with the second bevel gear, and the second bevel gear is connected to the first synchronization wheel 53 or the second synchronization wheel 54 by the transmission shaft 42. In the embodiment, the output shaft of the motor 41 extends in the up-and-down direction, which can facilitate the arrangement of the motor 41 and reduce the size of the lifting mechanism 100 in the left-right direction, thereby facilitating the arrangement of the lifting mechanism 100.

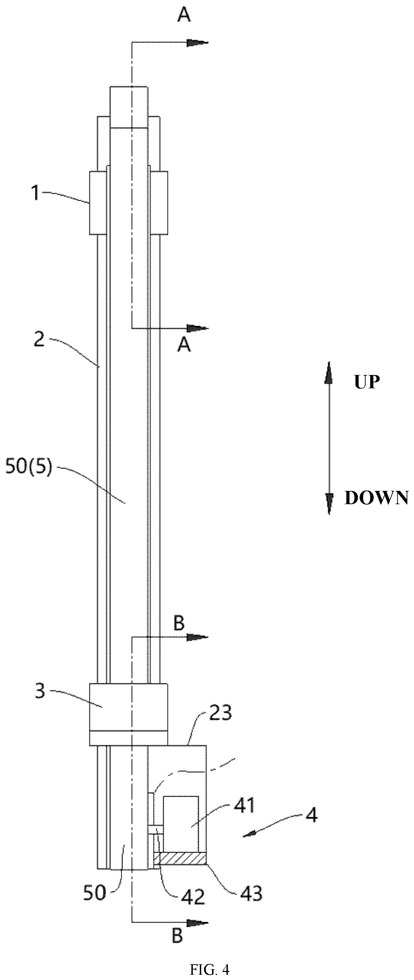

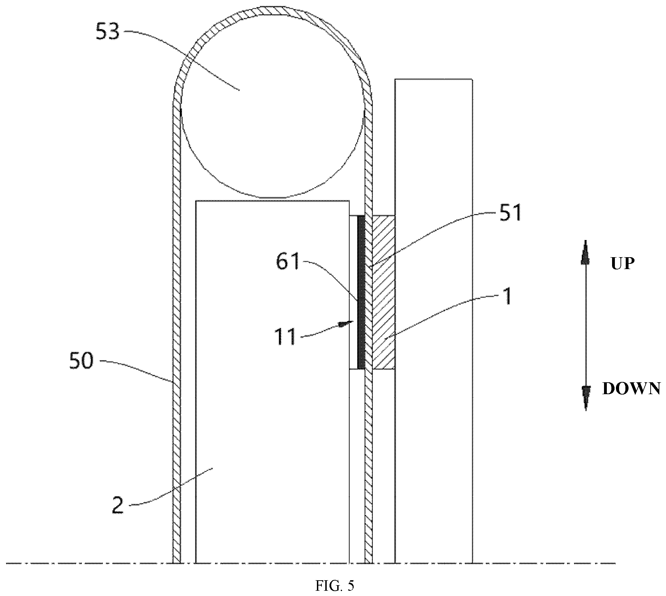

The first lifting structure 2 is connected to the fixed structure 1 movably in the up-and-down direction so as to be able to extend upward out of the fixed structure 1, as shown in FIG. 4 and FIG. 5, in some embodiments, the fixed structure 1 may have a first chute portion 11 with an opening facing the first lifting structure 2, a side of the first lifting structure 2 close to the fixed structure 1 is formed with a first slide rail portion 21 extending in the up-and-down direction, the first slide rail portion 21 is in sliding fit with the first chute portion 11, and the first connecting portion 51 is located in the first chute portion 11 and fixed to the first chute portion 11.

In the above embodiments, the first connecting portion 51 is adhered to the first chute portion 11. As shown in FIG. 5, the first connecting portion 51 of the synchronization member 50 may be located in the first chute, and the first connecting portion 51 may be adhered to an inner wall of the first chute portion 11, so that the first connecting portion 51 and the first chute portion 11 are fixed.

In order to improve the stability of connection between the first connecting portion 51 and the fixed structure 1, as shown in FIG. 5, in some embodiments, the lifting mechanism 100 may further include a first pressing plate 61, at least a portion of the first pressing plate 61 is located in the first chute portion 11 and configured to press the first connecting portion 51 against an inner wall of the first chute portion 11. The first pressing plate 61 and the inner wall of the first chute portion 11 can jointly hold the first connecting portion 51, and improve the adhesion between the inner wall of the first chute portion 11 and the first connecting portion 51. The friction between the first pressing plate 61 and the first connecting portion 51 can fix the first connecting portion 51, and reduce the possibility of relative movement occurring between the first connecting portion 51 and the fixed structure 1 when the adhesion between the inner wall of the first chute portion 11 and the first connecting portion 51 fails, thereby making the connection between the first connecting portion 51 and the fixed structure 1 stable.

The above first pressing plate 61 can be fixed to the fixed structure 1 by means of plugging, clamping or bolting. As an exemplary implementation, the fixed structure 1 may be formed with a plugging opening, the first pressing plate 61 can enter the inside of the first chute portion 11 through the plugging opening, the inside of the first chute portion 11 may be formed with a limiting groove, one end of the first pressing plate 61 is located in the limiting groove, and the other end is clamped in the plugging opening, so that the first pressing plate 61 can be fixed with the fixed structure 1, and the first pressing plate 61 and the inner wall of the first chute portion 11 can stably hold the first connecting portion 51. As another exemplary implementation, the first pressing plate 61 may be connected to the fixed structure 1 by bolts. In some embodiments, bolts may pass through the first pressing plate 61, the first connecting portion 51 and a threaded hole on the bottom wall of the first chute portion 11 in sequence, so as to fix the first pressing plate 61, the first connecting portion 51 and the first chute portion 11 as a whole. In this embodiment, the bolts can further ensure the stable connection between the first connecting portion 51 and the fixed structure 1, and improve the load-bearing capacity of the lifting mechanism 100.

The second lifting structure 3 is configured to be capable of moving up and down relative to the first lifting structure 2, in some embodiments, the second lifting structure 3 has a second chute portion 31 with an opening facing the first lifting structure 2, a side of the first lifting structure 2 close to the second lifting structure 3 is formed with a second slide rail portion 22 extending in the up-and-down direction, the second slide rail portion 22 is in sliding fit with the second chute portion 31, and the second connecting portion 52 is located inside the second chute portion 31 and fixed to the second chute portion 31.

In the above embodiments, in some embodiments, the second connecting portion 52 may be adhered to the second chute portion 31. As an exemplary implementation, the second connecting portion 52 may be adhered to an inner wall of the second chute portion 31.

In order to improve the stability of connection between the second connecting portion 52 and the second chute portion 31, in some embodiments, the lifting mechanism 100 may further include a second pressing plate 62, at least a portion of the second pressing plate 62 is located inside the second chute portion 31 and configured to press the second connecting portion 52 against an inner wall of the second chute portion 31. The second pressing plate 62 and the inner wall of the second chute portion 31 can jointly hold the second connecting portion 52, and improve the adhesion between the inner wall of the second chute portion 31 and the second connecting portion 52. The friction between the second pressing plate 62 and the second connecting portion 52 can fix the second connecting portion 52, and reduce the possibility of relative movement occurring between the second connecting portion 52 and the first lifting structure 2 when the adhesion between the inner wall of the second chute portion 31 and the second connecting portion 52 fails, thereby making the connection between the second connecting portion 52 and the first lifting structure 2 stable. The above second pressing plate 62 may be fixed to the first lifting structure 2 by means of plugging, clamping or bolting, and the present disclosure does not limit the specific connection mode.

The lifting mechanism 100 may be provided with a limiting structure 23, which is configured to limit disengagement of the first slide rail portion from the first chute portion, and to limit disengagement of the second slide rail portion from the second chute portion, the limiting structure 23 may be arranged on the first lifting structure 2, or may be arranged on the second lifting structure 3 and the fixed structure 1 respectively. As shown in FIG. 3 and FIG. 4, in some embodiments, the first lifting structure 2 may be provided with a limiting structure 23, which protrudes outward from the first slide rail portion 21 and the second slide rail portion 22, the limiting structure 23 is arranged close to the lower end of the first lifting structure 2, and the limiting structure 23 is configured to block at the lower end of the first chute portion 11 in the process of the first lifting structure 2 moving upward, and to block at the lower end of the second chute portion 31 in the process of the first lifting structure 2 moving downward.

In the above embodiments, as shown in FIG. 1, the limiting structure 23 can block at the lower end of the second chute portion 31 when the second lifting structure 3 moves downward to the maximum retracted position, so as to prevent the second lifting structure 3 from continuing to move downward, since the second lifting structure 3 and the first lifting structure 2 have an interlocking relationship through the synchronizing assembly, when the second lifting structure 3 moves downward to the maximum retracted position, the first lifting structure 2 also moves downward to the maximum retracted position, while the limiting structure 23 can limit the downward movement of the first lifting structure 2 and the second lifting structure 3 concurrently, so as to ensure the stability of the lifting mechanism 100. As shown in FIG. 2, the limiting structure 23 can block at the lower end of the first chute portion 11 when the first lifting structure 2 moves upward to the maximum extended position, so as to limit the continuing upward movement of the first lifting structure 2, which ensuring the stability of the lifting mechanism 100.

In the embodiment including the motor mounting bracket 43, in some embodiments, the limiting structure 23 and the motor mounting bracket 43 are integrally formed, as shown in FIG. 1 to FIG. 3, the top of the motor mounting bracket 43 can be used to block at the lower end of the first chute portion 11 or the second chute portion 31 as the limiting structure 23, and the motor mounting bracket 43 can be used to fix the motor 41 to improve the integration of the lifting mechanism 100.

In a second aspect of some embodiments of the present disclosure, a robot is provided, including an image acquisition device and the lifting mechanism 100 described above, the image acquisition device being mounted on the second lifting structure 3 of the lifting mechanism 100.

Through the above technical solution, in the moving process of the robot, the first lifting structure 2 and the second lifting structure 3 of the lifting mechanism 100 may both move downward, so that the lifting mechanism 100 is in the stowed state, thereby lowering the overall center of gravity of the robot and improving the stability and safety of the robot in the moving process. When the robot checks a target structure (such as a chassis, a locker or a container, etc.), the first lifting structure 2 and the second lifting structure 3 of the lifting mechanism 100 may move upward respectively, so that the image acquisition device on the second lifting structure 3 can have a suitable image acquisition height to realize an image acquisition function. Since the first lifting structure 2 and the second lifting structure 3 are interlocked through the synchronizing assembly 5, it can be realized that the first lifting structure 2 and the second lifting structure 3 can move upward concurrently by means of one driving structure 4, which can simplify the structure inside the robot and save costs, reduce the weight of the robot, and improve the battery life of the robot. In addition, the interlocking of the first lifting structure 2 and the second lifting structure 3 can realize the rapid movement of the second lifting structure 3 in the up-and-down direction, which can improve the moving efficiency of the image acquisition device in the up-and-down direction, realize rapid stowing and extension, and can realize rapid acquisition by reaching a specified height rapidly, thereby improving the image acquisition efficiency.

Through the above technical solution, the lifting mechanism may have a stowed state and an extended state when in use, and in the stowed state, the lifting mechanism may lower the overall center of gravity, so as to improve the structural stability of the lifting mechanism and facilitate the movement of the lifting mechanism. In the extended state, the lifting mechanism can make the second lifting structure have a larger height, so as to meet the height requirements of different application scenarios. In addition, the above lifting mechanism realizes the interlocking between the first lifting structure and the second lifting structure through the synchronizing assembly, so that the first lifting structure and the second lifting structure can move upward concurrently by means of one driving structure, simplify the structure and save costs, and the interlocking of the first lifting structure and the second lifting structure can realize the rapid movement of the second lifting structure in the up-and-down direction, improve the lifting efficiency of the second lifting structure, and be beneficial to meet the requirements of different application scenarios.

The preferred implementations of the present disclosure are described above in detail with reference to the drawings. However, the present disclosure is not limited to the specific details in the above implementations. Within the technical concept scope of the present disclosure, various simple modifications can be made to the technical solutions of the present disclosure, and these simple modifications all belong to the protection scope of the present disclosure.

In addition, it should be noted that the various specific technical features described in the above specific implementations can be combined in any suitable way without contradiction. In order to avoid unnecessary repetition, the present disclosure will not further describe various possible combinations.

In addition, various different implementations of the present disclosure can also be arbitrarily combined as long as they do not violate the idea of the present disclosure, and they should also be regarded as the content disclosed by the present disclosure.

## Claims

1. A lifting mechanism, comprising:
a fixed structure;
a first lifting structure, connected to the fixed structure movably in an up-and-down direction so as to be able to extend upward out of the fixed structure;
a second lifting structure, configured to be capable of moving up and down relative to the first lifting structure;
a driving structure, configured to drive the first lifting structure to move up and down relative to the fixed structure; and
a synchronization assembly, comprising a first synchronization wheel and a synchronization member, wherein the first synchronization wheel is rotatably disposed at an upper end of the first lifting structure, the synchronization member is wound around the first synchronization wheel, the synchronization member has a first connecting portion and a second connecting portion which are located on two sides of the first synchronization wheel respectively, the first connecting portion is fixed to the fixed structure, and the second connecting portion is fixed to the second lifting structure, so that the synchronization member is able to cause the second lifting structure to move up and down relative to the first lifting structure when the first lifting structure moves up and down relative to the fixed structure.

2. The lifting mechanism according to claim 1, wherein the synchronization assembly further comprises a second synchronization wheel, the second synchronization wheel is rotatably disposed at a lower end of the first lifting structure, the synchronization member is formed in a ring shape and wound around the second synchronization wheel, the driving structure is fixed to the first lifting structure, and the driving structure is connected to the first synchronization wheel or the second synchronization wheel and configured to drive the first synchronization wheel or the second synchronization wheel to rotate.

3. The lifting mechanism according to claim 2, wherein a distance between the first connecting portion and the first synchronization wheel is the same as a distance between the second connecting portion and the second synchronization wheel.

4. The lifting mechanism according to any one of claims 2-3, wherein the first lifting structure has a maximum extended position and a maximum retracted position, at the maximum extended position, the first connecting portion is close to the second synchronization wheel and the second connecting portion is close to the first synchronization wheel, and at the maximum retracted position, the first connecting portion is close to the first synchronization wheel and the second connecting portion is close to the second synchronization wheel.

5. The lifting mechanism according to any one of claims 2-4, wherein the driving structure comprises a motor, and an output shaft of the motor is perpendicular to the up-and-down direction, and the output shaft of the motor is connected to the first synchronization wheel or the second synchronization wheel; or,
the driving structure comprises a motor, a first bevel gear, a second bevel gear and a transmission shaft, an output shaft of the motor extends in the up-and-down direction, a rotation axis of the first bevel gear extends in the up-and-down direction, a rotation axis of the second bevel gear is perpendicular to the rotation axis of the first bevel gear, the output shaft of the motor is connected to the first bevel gear, the first bevel gear is engaged with the second bevel gear, and the second bevel gear is connected to the first synchronization wheel or the second synchronization wheel by the transmission shaft.

6. The lifting mechanism according to any one of claims 2-5, wherein the synchronization member is a synchronization belt, the first synchronization wheel is a first synchronization pulley, and the second synchronization wheel is a second synchronization pulley; or,
the synchronization member is a synchronization chain, the first synchronization wheel is a first synchronization sprocket, and the second synchronization wheel is a second synchronization sprocket.

7. The lifting mechanism according to any one of claims 1-6, wherein the fixed structure has a first chute portion with an opening facing the first lifting structure, a side of the first lifting structure close to the fixed structure is formed with a first slide rail portion extending in the up-and-down direction, the first slide rail portion is in sliding fit with the first chute portion, and the first connecting portion is located in the first chute portion and fixed to the first chute portion;
the second lifting structure has a second chute portion with an opening facing the first lifting structure, a side of the first lifting structure close to the second lifting structure is formed with a second slide rail portion extending in the up-and-down direction, the second slide rail portion is in sliding fit with the second chute portion, and the second connecting portion is located in the second chute portion and fixed to the second chute portion.

8. The lifting mechanism according to claim 7, wherein the first connecting portion is adhered to the first chute portion, and the second connecting portion is adhered to the second chute portion.

9. The lifting mechanism according to claim 8, wherein the lifting mechanism further comprises a first pressing plate, at least a part of the first pressing plate is located in the first chute portion and configured to press the first connecting portion against an inner wall of the first chute portion;
the lifting mechanism further comprises a second pressing plate, at least a part of the second pressing plate is located in the second chute portion and configured to press the second connecting portion against an inner wall of the second chute portion.

10. The lifting mechanism according to any one of claims 7-9, wherein the first lifting structure is provided with a limiting structure, the limiting structure protrudes outward from the first slide rail portion and the second slide rail portion, the limiting structure is arranged close to a lower end of the first lifting structure, and the limiting structure is able to block at a lower end of the first chute portion in a process of the first lifting structure moving upward, and to block at a lower end of the second chute portion in a process of the first lifting structure moving downward.

11. A robot, comprising an image acquisition device and the lifting mechanism according to any one of claims 1-10, the image acquisition device being mounted on the second lifting structure of the lifting mechanism.
